# EUROPÄISCHE PATENTANMELDUNG

(11) **EP 1 695 876 A1**
(43) Veröffentlichungstag der Anmeldung: **30.08.2006**
(21) Anmeldenummer: 06110113.5
(22) Anmeldetag: 17.02.2006
(51) Int. Cl.: B60R 21/015

(54) **Sitzbelegungserkennungsmatte**

(30) Priorität: 24.02.2005 DE 102005008591
(71) Anmelder: SIEMENS AKTIENGESELLSCHAFT, 80333 München (DE)
(72) Erfinder: Ellinger, Stefan, 93053, Regensburg (DE); Karges, Peter, Yokohama City Kanagawa 231-0842 (JP); Pietsch, Arnulf, 93049, Regensburg (DE); Zacherl, Jürgen, 93093, Donaustauf (DE)

(57) **Zusammenfassung**

Es wird eine Sitzbelegungserkennungsmatte (1) mit einer Anzahl von zwischen zwei Mattenfolien (8, 9) angeordneten druckempfindlichen Sensorelementen (2) vorgeschlagen, die zur Abschirmung vor elektromagnetischer Störstrahlung mit einer leitenden Schicht (7) versehen ist, die mit zumindest einer der Mattenfolien (8, 9) verbunden, vorzugsweise verklebt, oder in diese integriert ist.

## Beschreibung

Die Erfindung betrifft eine Sitzbelegungserkennungsmatte mit einer Anzahl von zwischen zwei Mattenfolien angeordneten, insbesondere druckempfindlichen Sensorelementen.

Solche Sitzbelegungserkennungsmatten werden seit geraumer Zeit zur Airbag- und/oder Gurtstraffersteuerung, zur Anzeige, dass der Gurt nicht angelegt ist, zur Lichteinstellung oder auch zur Sitzheizungsregelung in Fahrzeugen eingesetzt und sind aus der EP 1 491 408 A1 bekannt.

Eine solche Sitzbelegungserkennungsmatte ist in einen Fahrzeugsitz integriert und es wird mittels der Sitzbelegungserkennungsmatte ein Belegungszustand eines Fahrzeugsitzes ermittelt, und diese Information wird zur Weiterverarbeitung an das Fahrzeug übergeben, um die notwendigen Reaktionen im Fahrzeug zu veranlassen, z.B. werden der oder die dem Sitz zugeordneten Airbags oder sonstigen Rückhaltemittel wie beispielsweise Gurtstraffer nur dann aktiviert, wenn der momentane Belegungszustand eine solche Auslösung erforderlich macht. Die Sitzbelegungserkennungsmatten weisen im Allgemeinen eine Anzahl von zwischen zwei Mattenfolien angeordneten Sensorelementen, z.B. Drucksensoren, auf, die verteilt in oder unter der Sitzfläche des Fahrzeugsitzes angeordnet sind. Eine an die Sitzbelegungserkennungsmatte angeschlossene Auswerteeinheit fragt den Schaltzustand der einzelnen Sensorelemente oder einer Gruppe von Sensorelementen ab und ermittelt aus den jeweiligen Schaltzuständen einen Belegungszustand des Sitzes. Ist der Sitz durch eine Person oder einen Gegenstand belegt, werden ein Sensorelement oder mehrere der Sensorelemente aufgrund der durch die Person oder den Gegenstand auf den Sitz ausgeübten Gewichtskraft ausgelöst, ein Zustand, der von der angeschlossenen Auswerteeinheit als Belegungszustand des Sitzes erkannt und an das Fahrzeug, insbesondere die Airbagsteuerung, weitergegeben wird.

Da die Sitzbelegungserkennungsmatten somit auch in sicherheitsrelevanten Systemen verwendet werden, müssen sie hohen Qualitätsansprüchen genügen und geeignete Qualifizierungsprozesse durchlaufen. So ist es nötig, dass sie auch hinsichtlich ihrer elektromagnetischen Verträglichkeit (EMV) und/oder ihrer elektrostatischen Entlade-(ESD)-Festigkeit eine vorgegebene Qualifizierung sicher besteht. Die bisherigen Matten erfüllen entsprechende Anforderungen nicht in ausreichendem Maß. Die Erfindung soll diesem Problem Abhilfe schaffen.

In erfindungsgemäßer Weise wird dieses Problem gemäß Anspruch 1 dadurch gelöst, dass zumindest eine der Mattenfolien der Sitzbelegungserkennungsmatte mit einer leitenden Schicht versehen ist. Hierdurch kann in sehr wirkungsvoller Weise die Festigkeit hinsichtlich elektrostatischer Entladungen oder die Abschirmung von elektromagnetischen Feldern verbessert werden.

Wie sich aus den Unteransprüchen ergibt, ist bei einer erfindungsgemäßen Sitzbelegungserkennungsmatte in vorteilhafter Weise die leitende Schicht mit einer Mattenfolie verbunden, vorzugsweise verklebt. Die leitende Schicht kann jedoch auch in die Mattenfolie integriert, beispielsweise eingebettet sein. Dabei kann die leitende Schicht mit einem Metallgewebe oder einem sonstigen Gewebe mit metallischen Partikeln gebildet sein.

Um ein sich möglicherweise durch elektrostatische Entladung oder elektromagnetische Einstrahlung ausbildendes Potential auf der leitenden Schicht abzuführen, ist die leitende Schicht entweder mit dem Bezugspotential der Sensormatte oder mit einem Fahrzeugpotential, insbesondere dem Fahrzeugchassis, verbunden. Eine solche Verbindung kann dabei eine Kabel-oder eine Klemmverbindung sein oder bei Verbindung mit dem Bezugspotential der Sensormatte in besonders einfacher Weise eine Nietverbindung durch die Sensormatte oder eine Klemmverbindung am Mattenrand, um die leitende Schicht mit einem Leiter in oder auf der Sensormatte, der mit Bezugspotential verbunden ist, zu verbinden.

Die Erfindung soll nachfolgend anhand eines Ausführungsbeispiels mit Hilfe von Figuren näher erläutert werden. Dabei zeigen
- Figur 1: eine an sich bekannte Sitzbelegungserkennungsmatte ohne eine erfindungsgemäße leitende Schicht,
- Figur 2: eine Sitzbelegungserkennungsmatte mit einer erfindungsgemäßen leitenden Schicht,
- Figur 3: eine Prinzipdarstellung eines Querschnitts durch eine erfindungsgemäße Sitzbelegungserkennungsmatte,
- Figur 4: eine erste Verbindungsvariante der leitenden Schicht mit Bezugspotential und
- Figur 5: eine zweite Verbindungsvariante der leitenden Schicht mit Bezugspotential.

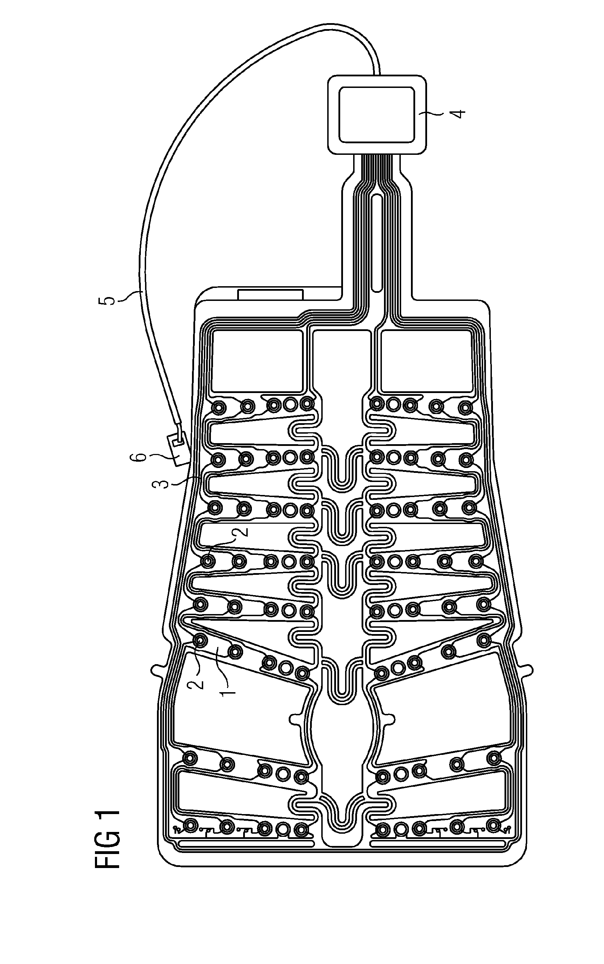

Die in Figur 1 dargestellte Sitzbelegungserkennungsmatte 1 weist eine Anzahl von Sensorelementen 2 auf, die nach dem Einbau der Sitzbelegungserkennungsmatte 1 in einen Fahrzeugsitz über die Sitzfläche verteilt angeordnet sind. Die Sensorelemente 2 sind über Leitungen 3 teilweise miteinander und mit einer Auswerteeinheit 4 verbunden. Die Sensorelemente 2 können dabei ähnlich wie Speicherzellen in einem Halbleiterspeicher durch geeignete Zeilen- und Spaltenleitungen einzeln von der Auswerteeinheit 4 abgefragt werden. Es ist jedoch genauso möglich, einzelne Sensorelemente 2 zu Gruppen zusammenzuschalten, um so lediglich das Ansprechen einer Sensorelementgruppe oder der gesamten Sitzbelegungserkennungsmatte abzufragen. Die Auswerteeinheit 4 ist über ein Kabel 5 mit einem Stecker 6 verbunden, der beispielsweise mit dem Fahrzeugkabelsatz verbunden werden kann, um so die Reaktion des Fahrzeugs abhängig von der Sitzbelegung zu machen. Die Auswerteeinheit 4 kann insbesondere mit einem Steuergerät für ein Insassenschutzsystem verbunden werden, um so die Auslösung beispielsweise eines Airbags abhängig von der Sitzbelegung zu machen.

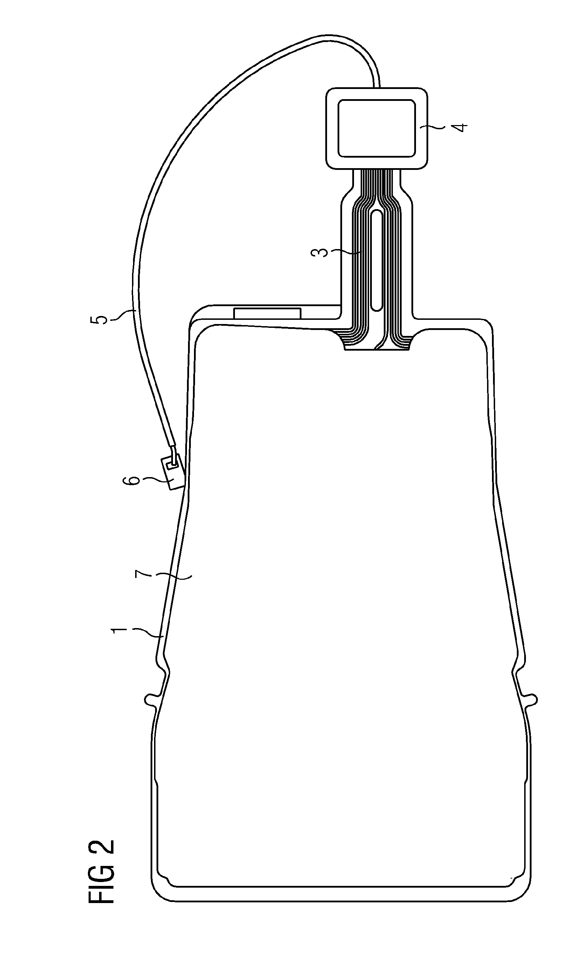

Figur 2 zeigt nun eine solche Sitzbelegungserkennungsmatte 1, die in erfindungsgemäßer Weise mit einer leitenden Schicht 7 bedeckt ist, um elektromagnetische Strahlung abzuschirmen.

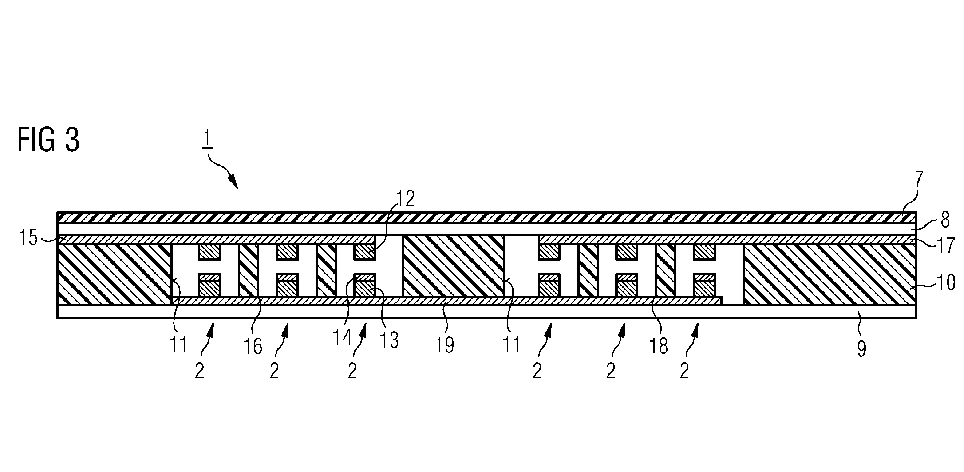

Figur 3 zeigt in schematischer Weise einen Querschnitt durch eine solche erfindungsgemäße Sitzbelegungserkennungsmatte 1. Die Sitzbelegungserkennungsmatte 1 ist dabei mit einer oberen und unteren Mattenfolie 8, 9 gebildet, zwischen denen eine Aussparungen 11 aufweisende Zwischenschicht 10 angeordnet ist. In den Aussparungen 11 der Zwischenschicht 10 sind Sensorelemente 2 angeordnet, die mit einer ersten Elektrode 12 und einer zweiten Elektrode 13 gebildet sind, wobei auf einer der Elektroden 12, 13 eine Schicht aus drucksensitivem Material 14 ausgebildet ist. Es können jedoch auch beide Elektroden 12, 13 mit Widerstandsmaterial versehen sein. Die Druckabhängigkeit wird dann durch den Flächenschluss der beiden Elektroden abhängig von der auf das Sensorelement aufgebrachten Kraft, und das Zusammenpressen der beiden Elektroden 12, 13 erzeugt.

Wenn nun eine Kraft auf die Sensormatte einwirkt, wird die Schicht aus drucksensitivem Material 14 zwischen den Elektroden 12, 13 eingeklemmt und bildet einen druckabhängigen Widerstand. Um diesen druckabhängigen Widerstand zu detektieren sind die Elektroden 12, 13 der Sensorelemente 2 im dargestellten Ausführungsbeispiel mit Leiterbahnen 15 bis 19 verbunden.

Im dargestellten Ausführungsbeispiel sind die Sensorelemente 2 in zwei Gruppen zu je drei Sensorelementen zusammengefasst wodurch zwar Leiterbahnen eingespart werden können, jedoch auch nur eine sehr einfache Sitzbelegungserkennung möglich ist. Wie bereits ausgeführt wurde, ist es ebenfalls möglich, durch geeignete Erhöhung der Anzahl der Leiterbahnen jedes einzelne Sensorelement 2 getrennt abzufragen.

Um die Sensorelemente 2 und die Leiterbahnen 15 bis 19 vor elektromagnetischen Störeinflüssen abzuschirmen oder vor elektrostatischer Entladung zu schützen, ist in erfindungsgemäßer Weise auf zumindest einer der Mattenfolien 8, 9, im dargestellten Ausführungsbeispiel auf der oberen Mattenfolie 8, eine leitende Schicht 7 angeordnet, beispielsweise mit der Mattenfolie 8 verklebt. Es ist jedoch ebenfalls möglich, die leitende Schicht 7 in die Mattenfolie 8 bzw. 9 zu integrieren, beispielsweise in diese einzubetten. Es ist ebenfalls denkbar, die leitende Schicht als Seite einer Tasche, in der sich die Sitzbelegungserkennungsmatte befindet, auszubilden,

Um sich aufgrund elektromagnetischer Störstrahlung ausbildende Potentiale auf der leitenden Schicht 7 abzuführen, sollte diese in geeigneter Weise mit einem Bezugspotential beispielsweise dem Bezugspotential der Sitzbelegungserkennungsmatte oder aber auch dem Fahrzeugpotential, verbunden werden.

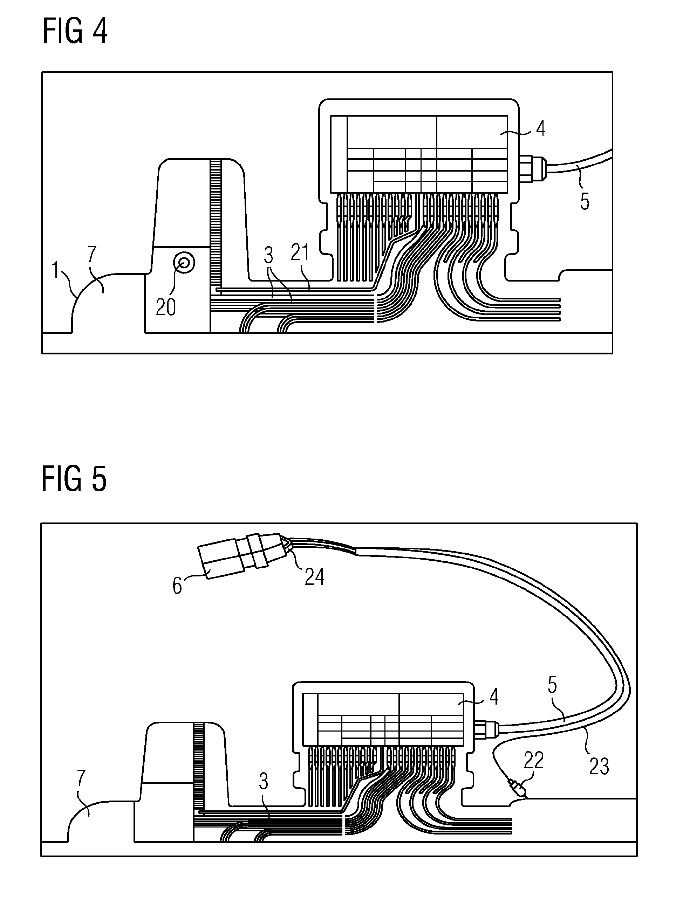

In den Figuren 4 und 5 sind hierzu zwei Verbindungsvarianten dargestellt.

In Figur 4 ist die leitende Schicht 7 über einen Nietkontakt 20 in der Sitzbelegungserkennungsmatte mit einer zusätzlichen Leitung 21 mit dem Bezugspotential der Auswerteeinheit 4 verbunden. Alternativ kann gemäß Figur 5 über einen Steckkontakt 22 die leitende Schicht 7 kontaktiert werden und über ein Kabel 23 mit einem Bezugspotentialkontakt 24 im Stecker 6 verbunden werden.

Beide dargestellte Varianten ermöglichen eine nachträgliche Ausrüstung herkömmlicher Sitzbelegungserkennungsmatten mit einer leitenden Schicht und einer geeigneten Verbindung mit Bezugspotential.

## Patentansprüche

1. Sitzbelegungserkennungsmatte (1) mit einer Anzahl von zwischen zwei Mattenfolien (8, 9) angeordnetem, insbesondere druckempfindlichen Sensorelementen (2), **dadurch gekennzeichnet, dass** zumindest eine der Mattenfolien (8, 9) mit einer leitenden Schicht (7) versehen ist.

2. Sitzbelegungserkennungsmatte nach Anspruch 1, **dadurch gekennzeichnet, dass** die leitende Schicht (7) mit einer Mattenfolie (8; 9) verbunden, vorzugsweise verklebt, ist.

3. Sitzbelegungserkennungsmatte nach Anspruch 1, **dadurch gekennzeichnet, dass** die leitende Schicht (7) in die Mattenfolie (8; 9) integriert ist.

4. Sitzbelegungserkennungsmatte nach einem der vorhergehenden Ansprüche, **dadurch gekennzeichnet, dass** die leitende Schicht (7) mit dem Bezugspotential der Sensormatte (1) verbunden ist.

5. Sitzbelegungserkennungsmatte nach Anspruch 4, **dadurch gekennzeichnet, dass** die Verbindung eine Nietverbindung (20) ist.

6. Sitzbelegungserkennungsmatte nach Anspruch 4, **dadurch gekennzeichnet, dass** die Verbindung eine Kabelverbindung (22, 23, 24) ist.

7. Sitzbelegungserkennungsmatte nach einem der Ansprüche 1 bis 3, **dadurch gekennzeichnet, dass** die leitende Schicht (7) mit einem Fahrzeugpotential, insbesondere dem Fahrzeugchassis, verbunden ist.
